# EUROPÄISCHE PATENTSCHRIFT

(11) **EP 4 214 790 B1**
(45) Veröffentlichungstag und Bekanntmachung des Hinweises auf die Patenterteilung: **17.01.2024**
(21) Anmeldenummer: 22725825.8
(22) Anmeldetag: 26.04.2022
(51) Int. Cl.: B60L 50/64, H01M 10/613, H01M 10/625, H01M 10/653, H01M 50/204, H01M 50/233, H01M 50/249

(54) **BATTERIEANORDNUNG FÜR EIN KRAFTFAHRZEUG**
BATTERY ARRANGEMENT FOR A MOTOR VEHICLE
ENSEMBLE BATTERIE POUR VÉHICULE AUTOMOBILE

(30) Priorität: 31.05.2021 DE 102021002803
(43) Veröffentlichungstag der Anmeldung: 26.07.2023
(73) Patentinhaber: Mercedes-Benz Group AG, 70372 Stuttgart (DE)
(72) Erfinder: SCHURZ, Andreas, 73101 Aichelberg (DE); RUOFF, Andreas, 73765 Neuhausen (DE); RIEDLINGER, Stefan, 73230 Kirchheim (DE); JOST, Reiner, 75365 Calw (DE); STASCH, Christian, 71083 Herrenberg (DE); GÄCKLE, Marius, 75382 Althengstett (DE)
(74) Vertreter: Novagraaf Group
(86) Internationale Anmeldenummer: PCT/EP2022/061113
(87) Internationale Veröffentlichungsnummer: WO 2022/253493

(56) Entgegenhaltungen:
- EP-A1- 3 736 879
- CN-U- 211 320 182
- KR-A- 20200 033 774
- US-A1- 2019 326 565

## Beschreibung

Die Erfindung betrifft eine Batterieanordnung für ein Kraftfahrzeug, mit einem Batteriegehäuse und wenigstens einem Zellmodul, welches auf einer Bodenplatte des Batteriegehäuses angeordnet ist. Das wenigstens eine Zellmodul umfasst ein Zellmodulgehäuse und eine Mehrzahl von in dem Zellmodulgehäuse angeordneten Batteriezellen. Ein Boden des Zellmodulgehäuses ist mittels einer Klebemasse mit der Bodenplatte des Batteriegehäuses verbunden.

Die CN 112151910 A beschreibt ein flüssigkeitsgekühltes Batteriesystem für ein Fahrzeug, bei welchem Batteriemodule in einem Gehäuse angeordnet sind. Das Gehäuse umfasst einen um die Batteriemodule umlaufenden Rahmen und eine Kühlplatte, welche mit dem Rahmen verbunden ist. Innerhalb des Rahmens sind die Batteriemodule auf der Kühlplatte angeordnet. Mittels eines wärmeleitfähigen Strukturklebstoffs sind zum einen die Batteriemodule mit der Kühlplatte verklebt. Zum anderen ist auch der Rahmen mittels des Strukturklebstoffs mit einer Oberseite der Kühlplatte verbunden, wobei in Eckbereichen des Rahmens zusätzlich eine Schweißverbindung vorgesehen ist.

KR 2020 0033774 A beschreibt eine Batterieanordnung für ein Kraftfahrzeug, mit einem Batteriegehäuse und wenigstens einem Zellmodul, welches auf einer Bodenplatte des Batteriegehäuses angeordnet ist, wobei das wenigstens eine Zellmodul ein Zellmodulgehäuse und eine Mehrzahl von in dem Zellmodulgehäuse angeordneten Batteriezellen umfasst, und wobei ein Boden des Zellmodulgehäuses mittels einer Klebemasse mit der Bodenplatte des Batteriegehäuses verbunden ist, wobei das Zellmodulgehäuse mittels eines weiteren Klebstoffs mit einer Seitenwand des Batteriegehäuses verbunden ist.

Des Weiteren kann bei einer Batterieanordnung für ein Kraftfahrzeug vorgesehen sein, die Zellmodule mit dem Batteriegehäuse zu verschrauben. Hierbei kann zwischen dem Boden des Zellmodulgehäuses und der Bodenplatte des Batteriegehäuses eine Wärmeleitpaste angeordnet sein. Die Zellmodule können mit dem Batteriegehäuse verbunden werden, indem die Schrauben in eine seitlich neben dem jeweiligen Zellmodulgehäuse angeordnete Anschraubleiste eingebracht werden. Bei dieser Ausgestaltung ist jedoch seitlich neben den Zellmodulen ein entsprechender Freiraum vorzusehen, um mit einem Schraubwerkzeug Zugang zu den Schrauben zu erhalten. Dies ist ungünstig.

Des Weiteren ist eine derartige, lediglich seitlich erfolgende Anbindung der Zellmodule an das Batteriegehäuse nicht ideal, insbesondere wenn die Zellmodule ein vergleichsweise hohes Gewicht aufweisen, wie dies bei Zellmodulen für eine Batterieanordnung eines Kraftfahrzeugs der Fall sein kann.

Darüber hinaus ist bei einer derartigen Anordnung der Zellmodule, bei welcher die Zellmodule mit den Anschraubleisten des Batteriegehäuses verschraubt sind, durch das jeweilige Zellmodul nur ein vergleichsweise wenig wirksames Seitenprofil im Hinblick auf ein seitliches Eindrücken des Batteriegehäuses bereitgestellt. Dies geht mit einem entsprechend niedrigen Widerstandsmoment der Batterieanordnung einher. Dementsprechend wird bei einer Verschraubung der Zellmodule mit dem Batteriegehäuse eine mechanische Steifigkeit des jeweiligen Zellmoduls für die mechanische Gesamtperformance der Batterieanordnung nicht optimal genutzt.

Außerdem ist es mit vergleichsweise hohen Kosten verbunden, die vergleichsweise teure Wärmeleitpaste zwischen dem Boden der Zellmodulgehäuse und der Bodenplatte des Batteriegehäuses anzuordnen. Zudem trägt eine hierbei vorzusehende große Menge an Wärmeleitpaste in nachteiliger Weise zu einem entsprechend hohen Gewicht der Batterieanordnung bei.

Bei der Auslegung eines Spalts oder Zwischenraums zwischen dem Boden der Zellmodulgehäuse und der Bodenplatte des Batteriegehäuses sind zudem Toleranzen zu berücksichtigen. Dies resultiert in einem vergleichsweise großen Spalt beziehungsweise großen Zwischenraum zwischen dem Boden des Zellmodulgehäuses und der Bodenplatte des Batteriegehäuses. Dementsprechend muss vergleichsweise viel teure Wärmeleitpaste verwendet werden, um diesen Zwischenraum oder Spalt möglichst weitgehend auszufüllen. Dies ist wie vorstehend erläutert im Hinblick auf die Kosten und das Gewicht der Batterieanordnung nachteilig.

Aufgabe der vorliegenden Erfindung ist es, eine Batterieanordnung der eingangs genannten Art zu schaffen, bei welcher eine verbesserte mechanische Anbindung des wenigstens einen Zellmoduls an das Batteriegehäuse erreicht ist.

Diese Aufgabe wird durch eine Batterieanordnung mit den Merkmalen des Patentanspruchs 1 gelöst. Vorteilhafte Ausgestaltungen mit zweckmäßigen Weiterbildungen der Erfindung sind in den abhängigen Patentansprüchen und in der nachfolgenden Beschreibung angegeben.

Die erfindungsgemäße Batterieanordnung für ein Kraftfahrzeug umfasst ein Batteriegehäuse und wenigstens ein Zellmodul. Das wenigstens eine Zellmodul ist auf einer Bodenplatte des Batteriegehäuses angeordnet. Das wenigstens eine Zellmodul umfasst ein Zellmodulgehäuse und eine Mehrzahl von in dem Zellmodulgehäuse angeordneten Batteriezellen. Ein Boden des Zellmodulgehäuses ist mittels einer Klebemasse mit der Bodenplatte des Batteriegehäuses verbunden. Des Weiteren ist das Zellmodulgehäuse mittels eines weiteren Klebstoffs mit einer Seitenwand des Batteriegehäuses verbunden. Hierbei weist der weitere Klebstoff eine höhere Scherfestigkeit auf als die zwischen dem Boden des Zellmodulgehäuses und der Bodenplatte des Batteriegehäuses angeordnete Klebemasse.

Dementsprechend wird durch den zwischen der Seitenwand des Batteriegehäuses und dem Zellmodulgehäuse angeordneten weiteren Klebstoff die mechanische Anbindung des wenigstens einen Zellmoduls an das Batteriegehäuse sichergestellt. Der die vergleichsweise hohe Scherfestigkeit aufweisende weitere Klebstoff trägt nämlich eine Hauptlast im Hinblick auf mechanische Anforderungen. Folglich ist bei der Batterieanordnung eine verbesserte mechanische Anbindung des wenigstens einen Zellmoduls an das Batteriegehäuse erreicht.

Demgegenüber sorgt die geringere Scherfestigkeit der Klebemasse dafür, dass bei einer erforderlichen Demontage das wenigstens eine Zellmodulgehäuse dennoch sehr leicht von dem Batteriegehäuse getrennt werden kann. Zu diesem Zweck ist zwar zunächst der weitere Klebstoff zu durchtrennen. Aufgrund der guten Zugänglichkeit dieses weiteren Klebstoffs kann dies jedoch sehr einfach vorgenommen werden, beispielsweise mittels eines sich hin und her bewegenden Schneidwerkzeugs etwa in Form eines Oszillationsmessers.

Im Anschluss an ein derartiges Durchtrennen einer durch den weiteren Klebstoff gebildeten Klebstoffschicht kann dann das wenigstens eine Zellmodul sehr einfach aus dem Batteriegehäuse herausgehoben werden, etwa mittels eines Aushebewerkzeugs. Dieses Herausnehmen des wenigstens einen Zellmoduls aus dem Batteriegehäuse gestaltet sich besonders einfach, da die Klebemasse lediglich die vergleichsweise geringe Scherfestigkeit aufweist.

Indem auf ein Verschrauben des wenigstens einen Zellmoduls mit dem Batteriegehäuse und insbesondere mit der Seitenwand des Batteriegehäuses verzichtet wird, lassen sich insbesondere eine Kosteneinsparung und eine Gewichtseinsparung erreichen. Dies liegt an der effektiven mechanischen Anbindung der Zellmodule in die Gesamtbatteriestruktur, insbesondere aufgrund der Verwendung des weiteren Klebstoffs mit der hohen Scherfestigkeit.

Des Weiteren ist es auf diese Weise möglich, einen Spalt oder Zwischenraum zwischen dem Boden des wenigstens einen Zellmodulgehäuses und der Bodenplatte des Batteriegehäuses besonders gering zu halten. Dies gilt insbesondere im Vergleich zu einer Batterieanordnung, bei welcher das wenigstens eine Zellmodul mit dem Batteriegehäuse verschraubt ist. Denn aufgrund des direkten Ausrichtens des wenigstens einen Zellmoduls auf der Bodenplatte des Batteriegehäuses unter Zwischenschaltung der Klebemasse ist eine Reduktion der Toleranzkette erreichbar. Kosten für die Klebemasse und auch eine Menge an Klebemasse können damit eingespart werden. Dies trägt zu einer Gewichtseinsparung der Batterieanordnung bei.

Wenn die Batterieanordnung in einem Kraftfahrzeug zum Einsatz kommt, wobei durch das wenigstens eine Zellmodul der Batterieanordnung vorzugsweise eine Hochvoltbatterie bereitgestellt ist, so ist eine derartige Gewichtseinsparung insbesondere im Hinblick auf eine CO₂-Bilanz des Kraftfahrzeugs besonders vorteilhaft.

Aufgrund der geringen Spalttoleranz zwischen dem Boden des Zellmodulgehäuses und der Bodenplatte des Batteriegehäuses lässt sich zudem eine besonders effektive Kühlung der in dem Zellmodulgehäuse aufgenommenen Batteriezellen im Betrieb derselben realisieren. Insbesondere lässt sich dadurch eine Schnellladefähigkeit der Batteriezellen verbessern.

Die Spalttoleranz ergibt sich bei der Batterieanordnung in vorteilhafter Weise lediglich aus Flächenformtoleranzen einer durch die Bodenplatte des Batteriegehäuses bereitgestellten Klebefläche und einer durch den Boden des wenigstens einen Zellmodulgehäuses bereitgestellten Klebefläche. Dadurch lässt sich die Batterieanordnung mit einer vergleichsweise geringen Menge an Klebemasse fertigen.

Des Weiteren ist die Anbindung des wenigstens einen Zellmoduls an das Batteriegehäuse im Hinblick auf den Bauraum verbessert, da kein Freiraum für eine Zugänglichkeit zu Schrauben mit einem Schraubwerkzeug vorgesehen zu werden braucht. Dies liegt daran, dass aufgrund der Verwendung des weiteren Klebstoffs für die Anbindung des Zellmodulgehäuses an das Batteriegehäuse auf ein Verschrauben des wenigstens einen Zellmoduls mit dem Batteriegehäuse verzichtet wird.

Darüber hinaus ist es möglich, durch das Zellmodulgehäuse einen effektiven Beitrag zur mechanischen Performance der Gesamtbatterie beziehungsweise der Batterieanordnung zu leisten. Außerdem können innerhalb der Batterieanordnung Kraftpfade durch einfache Lösungen erschlossen und effektiv genutzt werden. Dennoch lässt sich das wenigstens eine Zellmodul so einfach ausbauen, wie dies bei einer Anbindung des wenigstens einen Zellmoduls an das Batteriegehäuse mittels Schrauben oder Schraubbolzen der Fall ist.

Vorzugsweise liegt die Scherfestigkeit der Klebemasse im Bereich von etwa 0,1 MPa bis etwa 2 MPa. Des Weiteren hat es sich als vorteilhaft gezeigt, wenn die Scherfestigkeit des weiteren Klebstoffs im Bereich von etwa 5 MPa bis etwa 15 MPa liegt. Insbesondere auf diese Weise kann erreicht werden, dass selbst bei Vorsehen einer vergleichsweise kleinen Klebefläche, an welcher das Zellmodulgehäuse mittels des weiteren Klebstoffs mit der Seitenwand des Batteriegehäuses verbunden ist, eine große Haltekraft aufgebracht wird. Die demgegenüber vergleichsweise geringe Scherfestigkeit beziehungsweise geringe Zugfestigkeit der Klebemasse sorgt demgegenüber dafür, dass ein zerstörungsfreier Ausbau der Zellmodule durch ein Abziehen der Zellmodule nach oben im Falle einer Reparatur oder für ein Recycling gewährleistet ist.

Weitere Vorteile, Merkmale und Einzelheiten der Erfindung ergeben sich aus der nachfolgenden Beschreibung bevorzugter Ausführungsbeispiele sowie anhand der Zeichnung(en). Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: stark schematisiert eine Batterieanordnung, bei welcher ein Zellmodul mittels zweier Klebstoffe, welche unterschiedliche Scherfestigkeiten aufweisen, mit einem Batteriegehäuse der Batterieanordnung verklebt ist;
- Fig. 2: schematisch einen Ausschnitt der Batterieanordnung gemäß Fig. 1; und
- Fig. 3: schematisch einen weiteren Ausschnitt der Batterieanordnung sowie ein Aushebewerkzeug zum Herausheben des Zellmoduls aus dem Batteriegehäuse.

In den Figuren sind gleiche oder funktionsgleiche Elemente jeweils mit denselben Bezugszeichen versehen.

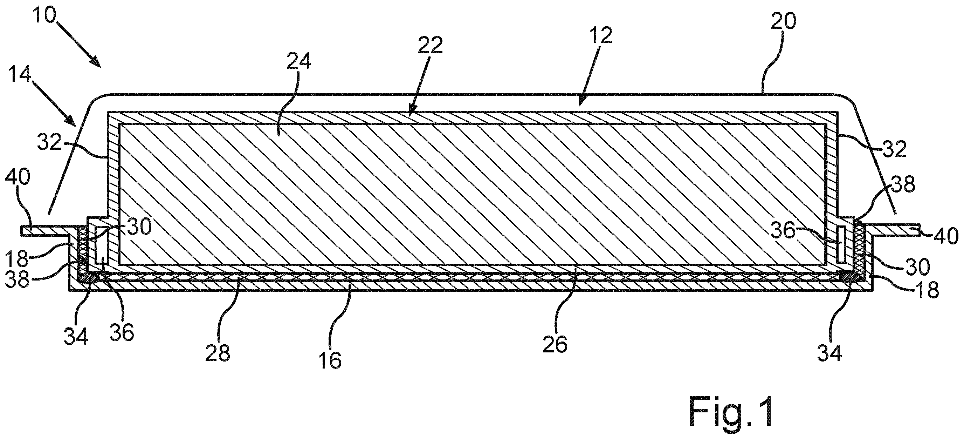

In Fig. 1 ist stark schematisiert eine Batterieanordnung 10 gezeigt, bei welcher ein Zellmodul 12 in einem Batteriegehäuse 14 angeordnet ist. Das Batteriegehäuse 14 umfasst ein vorliegend wannenförmiges Aufnahmeteil mit einer Bodenplatte 16 und einer um die Bodenplatte 16 umlaufenden Seitenwand 18. Die Seitenwand 18 kann, wie vorliegend beispielhaft gezeigt, insbesondere einstückig mit der Bodenplatte 16 des Batteriegehäuses 14 ausgebildet sein. Des Weiteren umfasst das Batteriegehäuse 14 einen Gehäusedeckel 20, welcher mit dem wannenförmigen Aufnahmeteil in vorliegend nicht näher gezeigter Art und Weise verbunden ist. Innerhalb eines von dem wannenförmigen Aufnahmeteil und dem Gehäusedeckel 20 begrenzten Aufnahmeraums ist das wenigstens eine Zellmodul 12 angeordnet.

Das wenigstens eine Zellmodul 12 weist vorliegend ein Zellmodulgehäuse 22 sowie innerhalb des Zellmodulgehäuses 22 angeordnete Batteriezellen 24 auf, welche vorliegend nicht im Detail gezeigt sind. Tatsächlich sind die einzelnen Batteriezellen 24 des Zellmoduls 12 elektrisch leitend miteinander verbunden, wobei die Batteriezellen 24 des jeweiligen Zellmoduls 12 elektrisch in Reihe und/oder parallel geschaltet sein können.

Insbesondere wenn durch die Batterieanordnung 10 eine Hochvoltbatterie für ein Kraftfahrzeug bereitgestellt werden soll, also ein vorzugsweise als Traktionsbatterie des Kraftfahrzeugs ausgebildeter elektrischer Energiespeicher, welcher eine Nennleistung von mehr als 60 Volt und insbesondere von bis zu mehreren hundert Volt aufweist, können in dem Batteriegehäuse 14 mehrere Zellmodule 12 elektrisch leitend miteinander verbunden sein.

Das Zellmodulgehäuse 22 umfasst einen Boden 26, welcher der Bodenplatte 16 des Batteriegehäuses 14 zugewandt ist. Zwischen dem Boden 26 und der Bodenplatte 16 ist eine Klebemasse 28 angeordnet. Diese Klebemasse 28 ist vorzugsweise wärmeleitfähig ausgebildet, sodass über die Klebemasse 28 gut von den Batteriezellen 24 im Betrieb derselben freigesetzte Wärme an das Batteriegehäuse 14 beziehungsweise eine entsprechende Kühleinrichtung abgegeben werden kann. Beispielsweise kann die Wärmeleitfähigkeit der Klebemasse 28 bei etwa 2 W/mK liegen und insbesondere im Bereich von 2 W/mK bis 2,5 W/mK.

Die Klebemasse 28 sorgt zwar für eine gewisse Fixierung des Zellmoduls 12 innerhalb des Batteriegehäuses 14. Jedoch ist eine Scherfestigkeit beziehungsweise Haltekraft der Klebemasse 28 vorzugsweise so bemessen, dass im Falle einer Reparatur oder eines Austausches des wenigstens einen Zellmoduls 12 das Zellmodul 12 wieder leicht von dem Batteriegehäuse 14, insbesondere von der Bodenplatte 16, getrennt werden kann. Vorzugsweise weist die Klebemasse 28 eine Mindesthaftung auf, durch welche Crashanforderungen und Betriebsfestigkeitsanforderungen erfüllt werden können. Durch die vergleichsweise geringe Scherfestigkeit beziehungsweise Zugfestigkeit der Klebemasse 28 ist dennoch der zerstörungsfreie Ausbau der Zellmodule 12 aus dem Batteriegehäuse 14 und insbesondere ein Herausnehmen aus dem wannenförmigen Aufnahmeteil des Batteriegehäuses 14 gewährleistet.

Im Gegensatz zu der als Wärmeleitklebstoff dienenden Klebemasse 28 sorgt ein weiterer Klebstoff 30 für die strukturelle Anbindung des wenigstens einen Zellmoduls 12 an das Batteriegehäuse 14. Mittels dieses weiteren Klebstoffs 30, welcher in Fig. 1 schematisch dargestellt ist, ist das Zellmodulgehäuse 22 vorliegend mit der Seitenwand 18 des Batteriegehäuses 14 verbunden. Dieser weitere Klebstoff 30 weist eine sehr hohe Scherfestigkeit auf, welche beispielsweise im Bereich von insbesondere 8 MPa bis 14 MPa liegen kann. Demgegenüber kann die Scherfestigkeit oder Zugfestigkeit der Klebemasse 28 insbesondere im Bereich von etwa 0,5 MPa bis 1,5 MPa liegen.

Sowohl die Scherfestigkeit beziehungsweise Zugfestigkeit des als Fixierklebstoff dienenden weiteren Klebstoffs 30 als auch die Scherfestigkeit beziehungsweise Zugfestigkeit der als Wärmeleitklebstoff dienenden Klebemasse 28 kann insbesondere nach der DIN EN ISO 527-2 ermittelt werden.

Zur stabilen Fixierung des wenigstens einen Zellmoduls 12 in dem Batteriegehäuse 14 ist der weitere Klebstoff 30 seitlich des Zellmoduls 12 und insbesondere zwischen einer Seitenwand 32 des Zellmodulgehäuses 22 und der Seitenwand 18 des wannenförmigen Aufnahmeteils des Batteriegehäuses 14 angeordnet. Für eine Demontage des Zellmoduls 12 kann der die hohe Scherfestigkeit aufweisende weitere Klebstoff 30 durchtrennt werden, etwa mittels eines Oszillationsmessers. Dies gestaltet sich besonders einfach, da an den Seiten des Zellmodulgehäuses 22 eine gute Zugänglichkeit für ein derartiges Schneidwerkzeug gegeben ist.

Vorzugsweise bedeckt die Klebemasse 28 den Boden 26 des Zellmodulgehäuses 22 im Wesentlichen flächig. Damit sich die Klebemasse 28 gut nivelliert und ein Zwischenraum oder Spalt zwischen der Bodenplatte 16 des Batteriegehäuses 14 und dem Boden 26 des Zellmodulgehäuses 22 möglichst gleichmäßig mit der Klebemasse 28 befüllt ist, kann zur Begrenzung einer entsprechenden Klebefläche ein Begrenzungselement vorgesehen sein.

Das beispielsweise als Dichtschnur oder Dichtband 34 ausgebildete Begrenzungselement begrenzt somit die von der Klebemasse 28 auf der Bodenplatte 16 des Batteriegehäuses 14 eingenommene Fläche randlich. Hierbei kann das Dichtband 34 oder dergleichen Begrenzungselement vor dem Einbau des wenigstens einen Zellmoduls 12 in das Batteriegehäuse 14 an dem Zellmodul 12 und/oder an der Bodenplatte 16 angebracht werden.

Um ein derartiges Begrenzungselement bereitzustellen, sind insbesondere Schaummaterialien geeignet. Wenn eine elektrisch leitfähige Verbindung des Zellmoduls 12 mit der Bodenplatte 16 vorgesehen sein soll, kann ein derartiges Schaummaterial auch metallisch kaschiert sein. Dementsprechend kann das Schaummaterial von einem elektrisch leitfähigen Metall des Begrenzungselements umgeben sein.

Aus Fig. 1 ist weiter ersichtlich, dass das Zellmodul 12 ein Energieabsorptionselement 36 aufweisen kann, durch welches eine Prallgeometrie bereitgestellt ist. Ein derartiges Energieabsorptionselement 36 kann bei einer seitlichen Kraftbeaufschlagung der Batterieanordnung 10 durch Verformung Aufprallenergie aufnehmen und so eine Beschädigung insbesondere der Batteriezellen 24 vermeiden. Bei der in Fig. 1 schematisch gezeigten Ausgestaltung ist der weitere Klebstoff 30 zwischen einer Außenseite 38 des Energieabsorptionselements 36 und der Seitenwand 18 des wannenförmigen Aufnahmeteils des Batteriegehäuses 14 angeordnet.

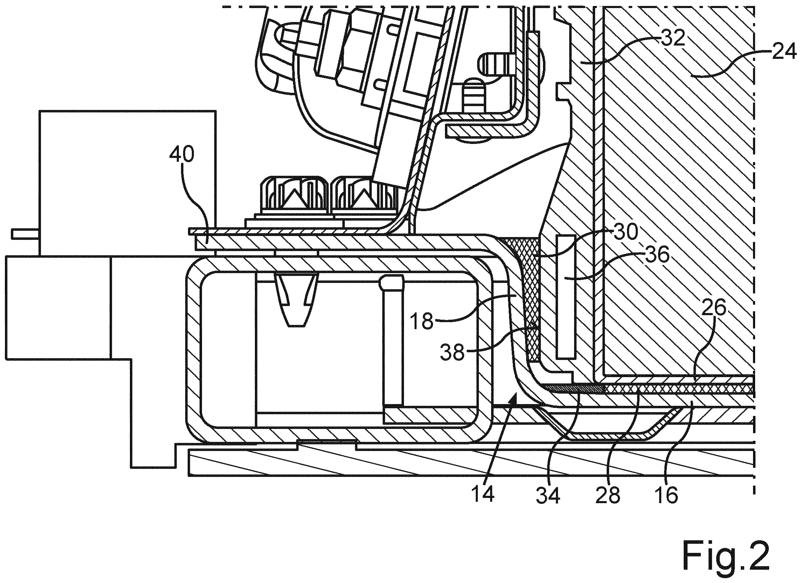

Eine mögliche Ausgestaltung des insbesondere einstückig mit der Seitenwand 32 ausgebildeten Energieabsorptionselements 36 nach Art einer einen Hohlraum aufweisenden Kammer ist beispielhaft in Fig. 2 gezeigt.

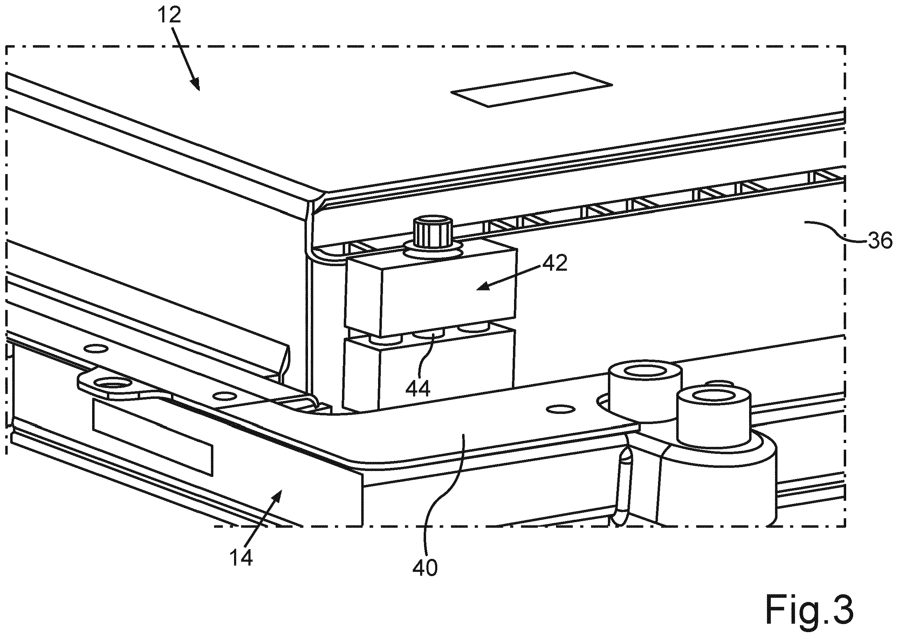

Demgegenüber ist aus Fig. 3 eine mögliche Ausgestaltung eines Randflansches 40 ersichtlich, welcher dem wannenförmigen Aufnahmeteil des Batteriegehäuses 14 zugehörig sein kann. Insbesondere an einem solchen Randflansch 40 kann der Gehäusedeckel 20 des Batteriegehäuses 14 (vergleiche Fig. 1) festgelegt werden.

In Fig. 3 ist außerdem eine Aushebevorrichtung 42 schematisch gezeigt, welche nach einem Durchtrennen des Klebstoffs 30 zum Zwecke eines Ausbaus des Zellmoduls 12 aus dem Batteriegehäuse 14 verwendet werden kann. Durch Betätigen der Aushebevorrichtung 42 kann somit insbesondere die Trennung des Bodens 26 des Zellmodulgehäuses 22 von der Bodenplatte 16 (vergleiche Fig. 1) des Batteriegehäuses 14 erreicht werden. Die Aushebevorrichtung 42 kann betätigt werden, nachdem der weitere Klebstoff 30 durchtrennt wurde, welcher der strukturellen Anbindung des Zellmoduls 12 an das Batteriegehäuse 14 dient und somit als Fixierklebstoff bezeichnet werden kann.

Beispielsweise kann die Aushebevorrichtung 42 eine Gewindespindel 44 umfassen, wobei durch Drehen der Gewindespindel 44 das Abheben des Bodens 26 des Zellmodulgehäuses 22 und somit des gesamten Zellmoduls 12 von der Bodenplatte 16 des Batteriegehäuses 14 (vergleiche Fig. 1) erreicht werden kann. Das Herausheben des Zellmoduls 12 aus dem wannenförmigen Aufnahmeteil des Batteriegehäuses 14 gestaltet sich bei Vorsehen einer solchen Aushebevorrichtung 42 besonders einfach.

Durch das Bereitstellen der die unterschiedlichen Scherfestigkeiten aufweisenden Klebstoffe in Form der vorzugsweise wärmeleitfähigen Klebemasse 28 einerseits und des als Fixierklebstoff dienenden weiteren Klebstoffs 30 andererseits sind vorliegend zwei aufeinander abgestimmte Fügekonzepte realisiert. Die gemeinsam wirkenden Fügekonzepte sorgen zum einen für das Bereitstellen einer ausreichenden Haltekraft zur Fixierung des Zellblocks oder Zellmoduls 12 innerhalb des Batteriegehäuses 14 für Anforderungen im normalen Betrieb der Batterieanordnung 10, aber auch für Anforderungen bei Sonderereignisse wie etwa beim Auftreten eines Unfalls des mit der Batterieanordnung 10 ausgestatteten Kraftfahrzeugs.

Des Weiteren ist die Möglichkeit eines zerstörungsfreien Ausbaus des wenigstens einen Zellmoduls 12 und einer Weiterverwendung der Einzelkomponenten im Reparaturfall gegeben, ohne dass eine aufwendige Reinigung von Oberflächen erforderlich wäre. Zudem ist eine ausreichende Wärmeabfuhr von den Batteriezellen 24 der Zellmodule 12 hin zu dem Batteriegehäuse 14 und insbesondere einer integrierten Kühleinrichtung gewährleistet.

Mögliche Parameter des durch den Wärmeleitklebstoff beziehungsweise die Klebemasse 28 bereitgestellten Fügekonzepts sollen nachfolgend beispielhaft erläutert werden. So kann als die Klebemasse 28 ein von der Sika Deutschland GmbH erhältlicher Klebstoff verwendet werden, welcher unter dem Markennamen Sikaflex^{®}-953 L30 erhältlich ist. Hierbei handelt es sich um einen Zweikomponentenklebstoff mit einem silanterminierten Polymer. Dieser Klebstoff weist eine Zugfestigkeit von 0,5 MPa bis 1,5 MPa auf und eine Viskosität von 30 +/- 20 Pa s. Die Wärmeleitfähigkeit dieses Klebstoffs beziehungsweise dieser Klebemasse 28 liegt im Bereich von 2 W/mK bis 2,5 W/m/K. Des Weiteren liegt bei Verwendung dieses Materials die Bruchdehnung gemäß DIN EN ISO 527-2 der Klebemasse 28 bei etwa 20 Prozent bis 50 Prozent.

Auf der im Wesentlichen horizontalen Fläche zwischen der Bodenplatte 16 des Batteriegehäuses 14 und dem Boden 26 des wenigstens einen Zellmoduls 12 kann diese Klebemasse 28 großflächig appliziert werden. Die Fläche etwa der Bodenplatte 16, auf welche die Klebemasse 28 aufgebracht wird, braucht jedoch nicht streng horizontal zu sein. Insbesondere können Abweichungen von + 10 ° bis - 10 ° von der Horizontalen vorhanden sein.

Vorzugsweise ist eine Fuge beziehungsweise ein Spalt zwischen der Bodenplatte 16 und dem Boden 26 möglichst klein, damit eine gute Wärmeabfuhr gewährleistet ist. Insbesondere kann eine Größe des Spalts im Bereich von 0,5 Millimetern bis 3 Millimetern liegen.

An dieser Fügestelle ist die Klebemasse 28 möglichst vollflächig zwischen der Bodenplatte 16 des Batteriegehäuses 14 und dem Boden 26 des jeweiligen Zellmodulgehäuses 22 angeordnet, sodass einerseits ein gleichmäßiger Wärmetransport und zum anderen eine gleichmäßige Fixierung der Zellmodule 12 erreicht werden kann.

Demgegenüber kann für die strukturelle Anbindung mittels des weiteren Klebstoffs 30 beispielsweise ein Zweikomponentenklebstoff in Form eines Polyurethan-Klebstoffs verwendet werden, etwa ein unter der Bezeichnung BETAFORCE^{™} 9050 von DuPont erhältlicher Klebstoff, welcher dementsprechend die Kennzeichnung BF9050 aufweisen kann. Dieser Klebstoff weist eine Viskosität von weniger als 1 Pa s und eine Wärmeleitung von weniger als 0,3 W/mK auf.

Des Weiteren liegt bei diesem Klebstoff die Bruchdehnung gemäß der DIN EN ISO 527-2 im Bereich von 150 Prozent bis 250 Prozent. Darüber hinaus weist dieser Klebstoff eine Shore-Härte von etwas weniger als 100 Shore A auf und eine Temperaturbeständigkeit bis etwa 800 Grad Celsius.

Der weitere Klebstoff 30 wird vorzugsweise zwischen den beiden Längsseiten des Zellblocks oder Zellmoduls 12 und dem Batteriegehäuse 14 und zwar insbesondere der Seitenwand 18 auf eine im Wesentlichen vertikale Fläche appliziert. Die Fläche braucht jedoch nicht streng vertikal zu sein, sondern es können insbesondere Abweichungen von der Vertikalen von + 10 ° bis - 10 ° vorliegen.

Die Fuge, in welcher der weitere Klebstoff 30 eingebracht wird, hat unter Berücksichtigung aller relevanten Toleranzen vorzugsweise eine Stärke von mindestens 1,5 Millimeter. Dadurch ist es im Reparaturfall möglich, ein Schneidwerkzeug, beispielsweise ein Oszillationswerkzeug, in diesen Bereich einzuführen, um die Klebeverbindung zu lösen.

Vorzugsweise erfüllt der weitere Klebstoff 30 eine Festigkeitsanforderung derart, dass seine Scherfestigkeit mindestens 8 MPa beträgt. Auf diese Weise kann von dem weiteren Klebstoff 30 selbst auf einer vergleichsweise kleinen Fläche eine sehr große Haltekraft aufgebracht werden.

Insbesondere im Verhältnis zu der von der Klebemasse 28 bedeckten Fläche des Bodens 26 des Zellmodulgehäuses 22 ist die von dem Klebstoff 30 bedeckte Fläche an der Seitenwand 32 des Zellmodulgehäuses 22 sehr klein und vorzugsweise um ein Vielfaches kleiner. Das Vorsehen einer entsprechend kleinen von dem weiteren Klebstoff 30 eingenommenen Fläche ist einerseits vorteilhaft, damit mit einem Schneidwerkzeug vergleichsweise geringer Länge und geringer Schnittkraft beziehungsweise innerhalb einer kurzen Prozessdauer das Durchtrennen des Klebstoffs 30 und das anschließende Herauslösen der Zellmodule 12 möglich ist.

Des Weiteren stehen dann im Bereich der Seitenwände 32 des Zellmoduls 12 noch große Flächen bereit, um Maßnahmen für einen möglichen Fehlerfall der Batteriezellen 24 vorzusehen. Beispielsweise können dann sehr ungehindert seitliche Ventingöffnungen beziehungsweise Lüftungsöffnungen an dem Zellmodul 12 oder Zellblock vorgesehen werden, beziehungsweise kann im Bereich der Seitenwände 32 ein freier Luftraum bereitgestellt werden. Insbesondere derartige Vorkehrungen erlauben es, bei einem thermischen Event aus wenigstens einer der Batteriezellen 24 austretende Gase beziehungsweise Fluide zu entsprechenden Öffnungen des Batteriegehäuses 14 zu leiten, insbesondere gezielt zu leiten.

Des Weiteren sind die beiden Fügekonzepte vorzugsweise durch das Dichtband 34 beziehungsweise eine entsprechende Dichtlippe und/oder Schaumraupe oder dergleichen derart getrennt, dass die strukturelle Anbindung gut wieder zu lösen ist, welche durch den weiteren Klebstoff 30 bewerkstelligt ist. Außerdem sorgt das Begrenzungselement etwa in Form des in Fig. 1 beispielhaft gezeigten Dichtbands 34 dafür, dass der Wärmeleitklebstoff beziehungsweise die Klebemasse 28 in der horizontalen Fläche verbleibt.

Wenn eine Reinigung der Klebestellen erforderlich ist, so können unterschiedliche Maßnahmen zum Einsatz kommen. Beispielsweise kann die Klebemasse 28 von der Unterseite des Zellmoduls 12 beziehungsweise Zellmodulgehäuses 22 beziehungsweise von der Oberseite der Bodenplatte 16 unter Verwendung eines einfachen Kunststoffschabers leicht manuell entfernt werden. Restmengen des als seitlicher Fixierklebstoff dienenden weiteren Klebstoffs 30 können mit einem einfachen scharfen Werkzeug mechanisch entfernt werden. Im Reparaturfall brauchen zudem anhaftende Klebstoffreste nicht vollständig entfernt zu werden. Vielmehr brauchen hier lediglich eine vorzusehende Spalthöhe zum erneuten Einbringen der Klebemasse 28 beziehungsweise eine vorzusehende Spaltbreite zum erneuten Einbringen des weiteren Klebstoffs 30 berücksichtigt zu werden.

Alternativ zu den vorstehend beispielhaft zum Bereitstellen der Klebemasse 28 und des weiteren Klebstoffs 30 genannten Produkten können für den Wärmeleitklebstoff beziehungsweise die Klebemasse 28 Produkte etwa der Polytec PT GmbH verwendet werden, beispielsweise ein Produkt des Typs VP2108, welches eine Festigkeit oder Scherfestigkeit von 0,5 MPa bei einer Wärmeleitfähigkeit von etwa 2,5 W/mK aufweist. Von dem Unternehmen Polytec PT GmbH sind zum Bereitstellen der Klebemasse 28 auch weitere, thermisch leitfähige Klebstoffe beziehbar, etwa ein Klebstoff auf Epoxidharzbasis mit Bornitrid als Füllstoff, welcher die Kennzeichnung TC 433 hat.

Des Weiteren können von dem Unternehmen Copaltec Produkte zum Bereitstellen der Klebemasse 28 bezogen werden, etwa des Typs ST 25 oder ST 30. Derartige Polyurethan-Vergussmassen weisen in vorteilhafter Weise ebenfalls eine geringe Festigkeit oder Scherfestigkeit im Bereich von 2 MPa bei einer Wärmeleitfähigkeit von etwa 1,5 W/mK auf.

Für den als Fixierklebstoff verwendeten weiteren Klebstoff 30 können insbesondere Produkte des Unternehmens Rühl verwendet werden, etwa ein Produkt des Typs Purocast 765, welches eine Scherfestigkeit von 3 MPa bis 10 MPa aufweist.

Des Weiteren kann zum Bereitstellen des weiteren Klebstoffs 30 etwa von dem Unternehmen L&L Products ein Produkt des Typs PU 10 Guss verwendet werden, welches eine Scherfestigkeit von etwa 10 MPa aufweist.

### Bezugszeichenliste

- 10: Batterieanordnung
- 12: Zellmodul
- 14: Batteriegehäuse
- 16: Bodenplatte
- 18: Seitenwand
- 20: Gehäusedeckel
- 22: Zellmodulgehäuse
- 24: Batteriezelle
- 26: Boden
- 28: Klebemasse
- 30: Gehäusedeckel
- 32: Seitenwand
- 34: Dichtband
- 36: Energieabsorptionselement
- 38: Außenseite
- 40: Randflansch
- 42: Ausgebevorrichtung
- 44: Gewindespindel

## Patentansprüche

1. Batterieanordnung für ein Kraftfahrzeug, mit einem Batteriegehäuse (14) und wenigstens einem Zellmodul (12), welches auf einer Bodenplatte (16) des Batteriegehäuses (14) angeordnet ist, wobei das wenigstens eine Zellmodul (12) ein Zellmodulgehäuse (22) und eine Mehrzahl von in dem Zellmodulgehäuse (22) angeordneten Batteriezellen (24) umfasst, und wobei ein Boden (26) des Zellmodulgehäuses (22) mittels einer Klebemasse (28) mit der Bodenplatte (16) des Batteriegehäuses (14) verbunden ist,
**dadurch gekennzeichnet, dass**
das Zellmodulgehäuse (22) mittels eines weiteren Klebstoffs (30) mit einer Seitenwand (18) des Batteriegehäuses (14) verbunden ist, wobei der weitere Klebstoff (30) eine höhere Scherfestigkeit aufweist als die zwischen dem Boden (26) des Zellmodulgehäuses (22) und der Bodenplatte (16) des Batteriegehäuses (14) angeordnete Klebemasse (28).

2. Batterieanordnung nach Anspruch 1,
**dadurch gekennzeichnet, dass**
die Scherfestigkeit der Klebemasse (28) im Bereich von etwa 0,1 MPa bis etwa 2 MPa liegt und/oder die Scherfestigkeit des weiteren Klebstoffs (30) im Bereich von etwa 5 MPa bis etwa 15 MPa liegt.

3. Batterieanordnung nach Anspruch 1 oder 2,
**dadurch gekennzeichnet, dass**
die Klebemasse (28) eine höhere Wärmeleitfähigkeit aufweist als der weitere Klebstoff (30).

4. Batterieanordnung nach einem der Ansprüche 1 bis 3,
**dadurch gekennzeichnet, dass**
die Seitenwand (18) einstückig mit der Bodenplatte (16) des Batteriegehäuses (14) ausgebildet ist.

5. Batterieanordnung nach einem der Ansprüche 1 bis 4,
**dadurch gekennzeichnet, dass**
die Klebemasse (28) den Boden (26) des Zellmodulgehäuses (22) im Wesentlichen flächig bedeckt, wobei eine von der Klebemasse (28) bedeckte Fläche des Bodens (26) des Zellmodulgehäuses (22) um ein Vielfaches größer ist als eine von dem weiteren Klebstoff (30) bedeckte Fläche einer Seitenwand (32) des Zellmodulgehäuses (22).

6. Batterieanordnung nach einem der Ansprüche 1 bis 5,
**dadurch gekennzeichnet, dass**
eine von der Klebemasse (28) auf der Bodenplatte (16) des Batteriegehäuses (14) eingenommene Fläche randlich durch ein, insbesondere als Dichtschnur und/oder Dichtband (34) ausgebildetes, Begrenzungselement begrenzt ist, welches zwischen der Bodenplatte (16) des Batteriegehäuses (14) und dem Boden (26) des Zellmodulgehäuses (22) angeordnet ist.

7. Batterieanordnung nach einem der Ansprüche 1 bis 6,
**dadurch gekennzeichnet, dass**
das Zellmodulgehäuse (22) ein Energieabsorptionselement (36) umfasst, welches eine der Seitenwand (18) des Batteriegehäuses (14) zugewandte Außenseite (38) aufweist, wobei der weitere Klebstoff (30) zwischen der Außenseite (38) des Energieabsorptionselements (36) und der Seitenwand (18) angeordnet ist.

8. Batterieanordnung nach einem der Ansprüche 1 bis 7,
**dadurch gekennzeichnet, dass**
durch die Seitenwand (18) und die Bodenplatte (16) ein wannenförmiges Aufnahmeteil des Batteriegehäuses (14) bereitgestellt ist, wobei das Batteriegehäuse (14) einen Gehäusedeckel (20) umfasst, welcher mit dem Aufnahmeteil verbunden ist.

## Claims

1. Battery assembly for a motor vehicle, comprising a battery housing (14) and at least one cell module (12), which is arranged on a base plate (16) of the battery housing (14), the at least one cell module (12) comprising a cell module housing (22) and a plurality of battery cells (24) arranged in the cell module housing (22), and a base (26) of the cell module housing (22) being joined to the base plate (16) of the battery housing (14) by means of a glue (28),
**characterized in that**
the cell module housing (22) is joined to a side wall (18) of the battery housing (14) by means of a further adhesive (30), the further adhesive (30) having a higher shear strength than the glue (28) arranged between the base (26) of the cell module housing (22) and the base plate (16) of the battery housing (14).

2. Battery assembly according to claim 1,
**characterized in that**
the shear strength of the glue (28) is in the range of approximately 0.1 MPa to approximately 2 MPa and/or the shear strength of the further adhesive (30) is in the range of approximately 5 MPa to approximately 15 MPa.

3. Battery assembly according to claim 1 or 2,
**characterized in that**
the glue (28) has a higher thermal conductivity than the further adhesive (30).

4. Battery assembly according to any of claims 1 to 3,
**characterized in that**
the side wall (18) is formed integrally with the base plate (16) of the battery housing (14).

5. Battery assembly according to any of claims 1 to 4,
**characterized in that**
the glue (28) substantially extensively covers the base (26) of the cell module housing (22), a surface of the base (26) of the cell module housing (22) covered by the glue (28) being many times larger than a surface of a side wall (32) of the cell module housing (22) covered by the further adhesive (30).

6. Battery assembly according to any of claims 1 to 5,
**characterized in that**
a surface occupied by the glue (28) on the base plate (16) of the battery housing (14) is delimited at the edge by a delimiting element, in particular in the form of a sealing cord and/or sealing tape (34), which is arranged between the base plate (16) of the battery housing (14) and the base (26) of the cell module housing (22).

7. Battery assembly according to any of claims 1 to 6,
**characterized in that**
the cell module housing (22) comprises an energy absorption element (36) which has an outer side (38) facing the side wall (18) of the battery housing (14), the further adhesive (30) being arranged between the outer side (38) of the energy absorption element (36) and the side wall (18).

8. Battery assembly according to any of claims 1 to 7,
**characterized in that**
a trough-shaped receiving part of the battery housing (14) is provided by the side wall (18) and the base plate (16), the battery housing (14) comprising a housing cover (20) which is connected to the receiving part.

## Revendications

1. Ensemble de batterie pour un véhicule automobile, comportant un boîtier de batterie (14) et au moins un module cellulaire (12), lequel est disposé sur une plaque de fond (16) du boîtier de batterie (14), l'au moins un module cellulaire (12) comprenant un boîtier de module cellulaire (22) et une pluralité de cellules de batterie (24) disposées dans le boîtier de module cellulaire (22), et un fond (26) du boîtier de module cellulaire (22) étant relié à la plaque de fond (16) du boîtier de batterie (14) au moyen d'une masse adhésive (28),
**caractérisé en ce que**
le boîtier de module cellulaire (22) est relié à une paroi latérale (18) du boîtier de batterie (14) au moyen d'un autre adhésif (30), l'autre adhésif (30) présentant une résistance au cisaillement supérieure à celle de la masse adhésive (28) disposée entre le fond (26) du boîtier de module cellulaire (22) et la plaque de fond (16) du boîtier de batterie (14).

2. Ensemble de batterie selon la revendication 1,
**caractérisé en ce que**
la résistance au cisaillement de la masse adhésive (28) se situe dans la plage d'environ 0,1 MPa à environ 2 MPa et/ou la résistance au cisaillement de l'autre adhésif (30) se situe dans la plage d'environ 5 MPa à environ 15 MPa.

3. Ensemble de batterie selon la revendication 1 ou 2,
**caractérisé en ce que**
la masse adhésive (28) présente une conductivité thermique supérieure à celle de l'autre adhésif (30).

4. Ensemble de batterie selon l'une des revendications 1 à 3,
**caractérisé en ce que**
la paroi latérale (18) est réalisée d'une pièce avec la plaque de fond (16) du boîtier de batterie (14).

5. Ensemble de batterie selon l'une des revendications 1 à 4,
**caractérisé en ce que**
la masse adhésive (28) couvre essentiellement toute la surface du fond (26) du boîtier de module cellulaire (22), une surface du fond (26) du boîtier de module cellulaire (22) couverte par la masse adhésive (28) étant plusieurs fois plus grande qu'une surface d'une paroi latérale (32) du boîtier de module cellulaire (22) couverte par l'autre adhésif (30).

6. Ensemble de batterie selon l'une des revendications 1 à 5,
**caractérisé en ce que**
une surface occupée par la masse adhésive (28) sur la plaque de fond (16) du boîtier de batterie (14) est limitée en bordure par un élément de limitation, en particulier réalisé en tant que cordon d'étanchéité et/ou bande d'étanchéité (34), lequel est disposé entre la plaque de fond (16) du boîtier de batterie (14) et le fond (26) du boîtier de module cellulaire (22).

7. Ensemble de batterie selon l'une des revendications 1 à 6,
**caractérisé en ce que**
le boîtier de module cellulaire (22) comprend un élément d'absorption d'énergie (36), lequel présente une face extérieure (38) faisant face à la paroi latérale (18) du boîtier de batterie (14), l'autre adhésif (30) étant disposé entre la face extérieure (38) de l'élément d'absorption d'énergie (36) et la paroi latérale (18).

8. Ensemble de batterie selon l'une des revendications 1 à 7,
**caractérisé en ce que**
une partie de réception en forme de cuve du boîtier de batterie (14) est fournie par la paroi latérale (18) et la plaque de fond (16), le boîtier de batterie (14) comprenant un couvercle de boîtier (20), lequel est relié à la partie de réception.
